# FASCICULE DE BREVET EUROPEEN

(11) **EP 0 831 041 B1**
(45) Date de publication et mention de la délivrance du brevet: **27.12.2000**
(21) Numéro de dépôt: 97402147.9
(22) Date de dépôt: 17.09.1997
(51) Int. Cl.: B65G 47/61, B62D 65/00

(54) **Dispositif de transfert d'objets**
Vorrichtung zum Überführen von Fördergut
Device for transferring articles

(30) Priorité: 19.09.1996 FR 9611421
(43) Date de publication de la demande: 25.03.1998
(73) Titulaire: Dürr Systems France SA, 78450 Chavenay (FR)
(72) Inventeur: Riat, Jean-Paul, 92000 Nanterre (FR)
(74) Mandataire: Hasenrader, Hubert

(56) Documents cités:
- DE-A- 2 910 780
- LU-A- 65 944

## Description

L'invention concerne un dispositif de transfert d'objets où chaque objet est supporté par une balancelle, qui comprend des moyens de suspension de balancelle et des moyens d'entraînement principaux permettant le déplacement de la balancelle sur une ligne de transfert principale.

Dans une chaîne de production, par exemple une chaîne de montage de véhicule automobile, chaque poste de travail requiert un temps de passage différent de l'objet traité selon le type d'opération réalisée. Pour remédier à cette absence d'uniformité du temps de passage à chaque poste de travail, certains dispositifs de transfert possèdent une gestion individuelle de la vitesse de déplacement de chaque balancelle. Cette solution est économiquement très lourde à supporter.

L'invention entend remédier à ces inconvénients en proposant un dispositif de transfert dont la plus grande partie constitutive est peu onéreuse, de par une construction simplifiée, qui permet toutefois, à certains endroits, une vitesse de déplacement des balancelles différente par rapport au reste du dispositif de transfert.

L'invention vise à fournir un dispositif de transfert principal de construction simple (chaîne monorail, vitesse de transfert constante pour toutes les balancelles) sur laquelle il est possible, aux endroits voulus, de réaliser un traitement de plus lon ue durée sur l'objet porté par la balancelle.

La présente invention concerne un dispositif du type précité dans lequel les moyens de suspension de la balancelle possèdent un premier élément de système d'accouplement formant ergot et une surface d'appui, les moyens d'entraînement principaux comportent un deuxième élément de système d'accouplement formant crochet ouvert vers le haut et pouvant coopérer de manière réversible avec le premier élément de système d'accouplement de façon à former une liaison amovible entre les moyens de suspension et les moyens d'entraînement principaux, le dispositif de transfert d'objet comportant en outre des moyens de déchargement permettant la séparation et l'éloignement de la balancelle par rapport à la ligne de transfert principale et comportant des moyens de support pouvant coopérer avec ladite surface d'appui, des moyens de séparation possédant des moyens de soulèvement vertical des moyens de support permettant le désaccouplement entre le premier et le deuxième éléments de système d'accouplement, et des moyens de déplacement latéral de la balancelle reliés aux moyens de support et permettant un déplacement des moyens de support en position soulevée selon une direction orthogonale à la ligne de transfert principale.

On connait ce type de dispositif par le document DE 29 10 780 qui présente un système utilisant non pas une balancelle mais plus généralement une suspension référencée 15.

Toutefois, un dispositif de transfert d'objet tel que celui présenté par le document précité comporte un certain nombre d'inconvénients. Ainsi, lors des opérations successives sur cette suspension (déchargement de la voie de transport 7, déplacement transversal et chargement sur la voie de charge 10), une déstabilisation telle qu'un mouvement de balancement est susceptible d'affecter la suspension. Conformément à l'invention, pour faciliter le décrochement de la balancelle de la ligne de transfert principale et pour permettre le support de la balancelle décrochée de la ligne de transfert principale, il est prévu que les moyens de support comportent un chemin de galets et en ce que les moyens de suspension de la balancelle possèdent en outre deux montants reliés entre eux par une barre de déchargement horizontale dont la surface inférieure constitue ladite surface d'appui, chaque montant ayant un ergot.

De cette manière, le support de la balancelle s'effectue au niveau de la surface d'appui qui, d'une part, appartenant à toute la longueur d'une barre de déchargement horizontale et, d'autre part, étant distincte et située à une hauteur plus basse que l'ergot formant le premier élément de système d'accouplement, garantit la stabilité de la balancelle quel que soit son mouvement.

Selon une autre configuration avantageuse de l'invention, les moyens d'entraînement principaux comportent en outre une chaîne de transfert monorail sur laquelle des crochets régulièrement espacés se déplacent à vitesse constante.

L'avantage principal de l'invention réside dans la possibilité de décrocher les balancelles à un endroit de la ligne de transfert principale où l'opération de traitement à réaliser sur l'objet est de longue durée avant de raccrocher les balancelles dans la ligne de transfert principale qui constitue un circuit sans fin de conception très économique puisqu'elle est constituée d'une chaîne monorail à vitesse unique.

Une fois que la balancelle est décrochée, on peut concevoir plusieurs circuits possibles avant le retour de cette balancelle sur la ligne de transfert principale. Dans le cas le plus simple, la balancelle est décrochée, elle est écartée de la ligne de transfert principale, on réalise à cet endroit le traitement prévu et on remet, par accrochage, la balancelle dans la ligne de transfert principale, au même endroit que lors du décrochage. On peut également prévoir que la balancelle, une fois décrochée, est placée sur une autre chaîne de transfert qui possède un début et une fin, la balancelle se déplaçant alors à une vitesse différente de la vitesse de la ligne de transfert principale et cette balancelle est à nouveau raccrochée sur la ligne de transfert principale au niveau de l'extrémité finale de cette ligne de transfert secondaire.

Dans un autre cas de figure, le dispositif de transfert selon l'invention peut servir d'aiguillage entre deux chaînes de transfert en boucle fermée possédant des vitesses de déplacement différentes, l'invention permettant alors de faire passer les balancelles d'une chaîne de transfert à l'autre. Cet aiguillage peut être réalisé entre des chaînes de transfert parallèles entre elles, éventuellement placées sur plusieurs niveaux, ou des chaînes de transfert radiales convergeant vers un poste de déchargement rotatif.

L'invention sera mieux comprise, et les caractéristiques secondaires et leurs avantages apparaîtront au cours de la description du mode de réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une vue longitudinale de face d'une portion du dispositif de transfert selon l'invention dans le cas où une balancelle est au niveau des moyens de déchargement ;
- la figure 2 est une vue agrandie de la figure 1 représentant la partie avant de la balancelle avec un montant des moyens de support ;
- la figure 3 est une vue latérale selon la direction III de la figure 2 représentant le montant de l'avant de la balancelle et la coopération entre les moyens de suspension de la balancelle et une partie des moyens de déchargement ;
- la figure 4 est une vue agrandie de la figure 3 dans la zone de liaison entre les moyens de suspension et les moyens de déchargement ;
- la figure 5 est une vue identique à celle de la figure 4 dans le cas où la balancelle n'est pas en regard des moyens de déchargement ;
- la figure 6 est une vue longitudinale schématique des moyens de déchargement de la balancelle ;
- la figure 7 est une vue latérale de la figure 6 selon la direction VII -VII de la figure 6 ; et,
- la figure 8 est une vue du dessus des moyens de déchargement placés à côté et parallèlement à la ligne de transfert principale.

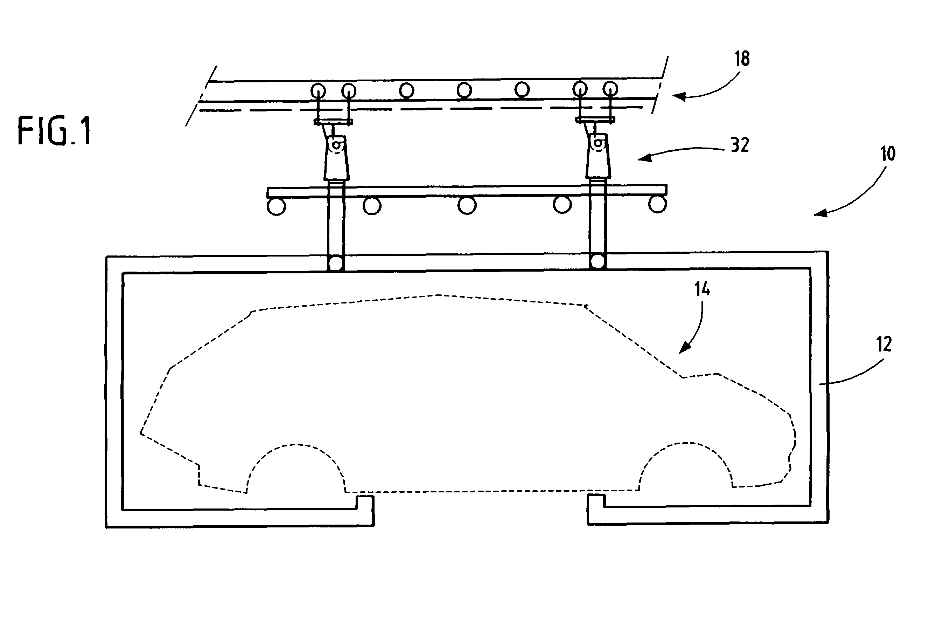

On se reportera maintenant à la figure 1 sur laquelle une balancelle circulant sur la ligne de transfert principale se trouve en regard des moyens de déchargement. Le dispositif de transfert 10 permet le déplacement d'un certain nombre de balancelles 12 supportant des véhicules automobiles 14 en cours de fabrication. Des moyens de suspension 16 de la balancelle 12 sont fixés au sommet de la balancelle et la relient à la ligne de transfert principale 18 le long de laquelle sont convoyées les balancelles 12 d'un poste de travail à l'autre.

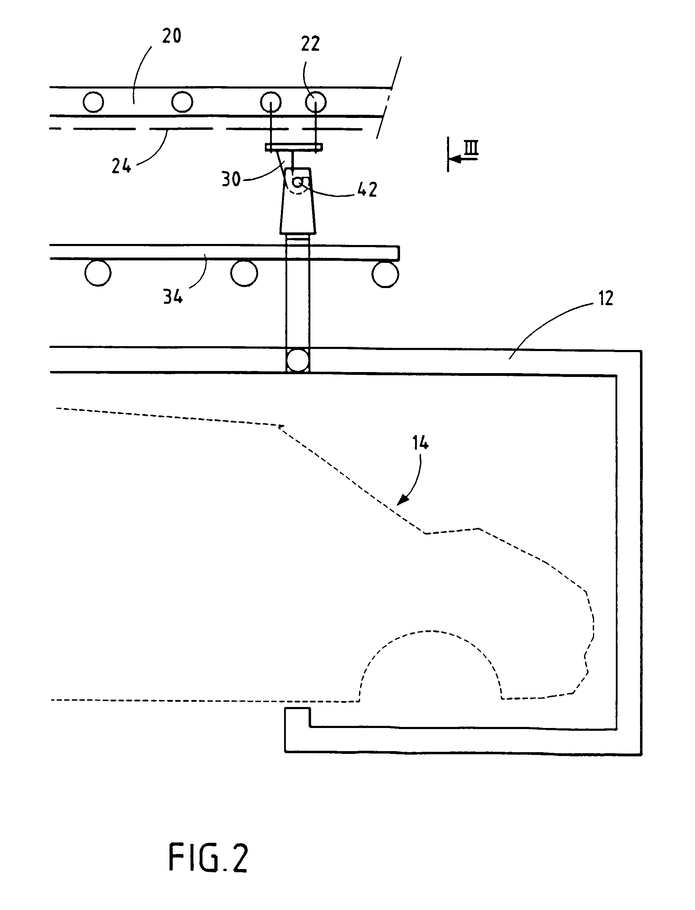

De façon classique la ligne de transfert principale est une chaîne en circuit fermé le long de laquelle sont placés les postes de travail successifs pour le montage et la production d'un véhicule automobile. Dans le mode de réalisation préféré, on utilisera pour la ligne de transfert principale 18 une chaîne monorail. Comme on le voit mieux sur la figure 2, la ligne de transfert principale 18 est un convoyeur monorail qui comprend un rail unique 20 sur lequel roulent des galets 22 pivotants qui sont en rotation constante à vitesse uniforme, ces galets 22 sont tractés par une chaîne de transmission (non représentée) d'axe 24. Le rail 20 possède, en section transversale, un profilé 20 en forme de I sur lequel, grâce à la rotation des galets 22, va coulisser un trolley 26 relié à la balancelle 12.

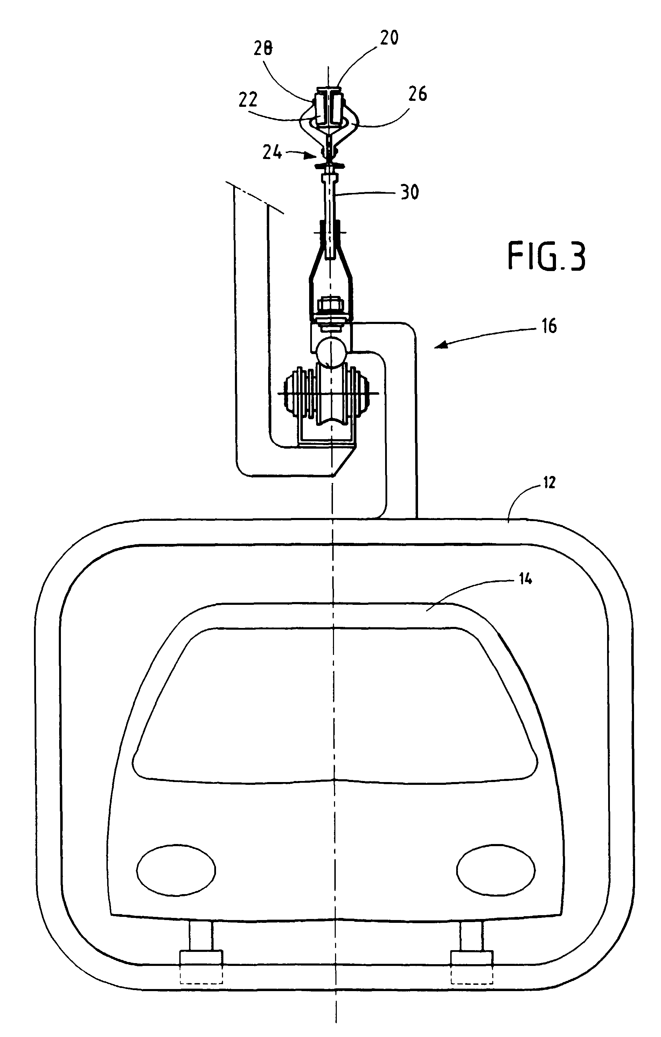

Pour coopérer avec le rail 20 à section en forme de I, le trolley 26 possède, de préférence, en vue de face (figure 3), une forme d'anneau ouvert ou de Ω à l'envers avec ses deux extrémités libres 28 placées de part et d'autre de l'aile centrale verticale du rail de transport 20.

La chaîne de transmission est fixée sur le trolley 26 de façon à l'entraîner dans son mouvement de déplacement le long de la ligne de transfert principale 18. Un crochet 30 avec une ouverture vers le haut est relié dans le prolongement vertical, vers le bas, de deux trolleys 26 consécutifs et sert à supporter les moyens de suspension 16 auxquels est fixée la balancelle 12.

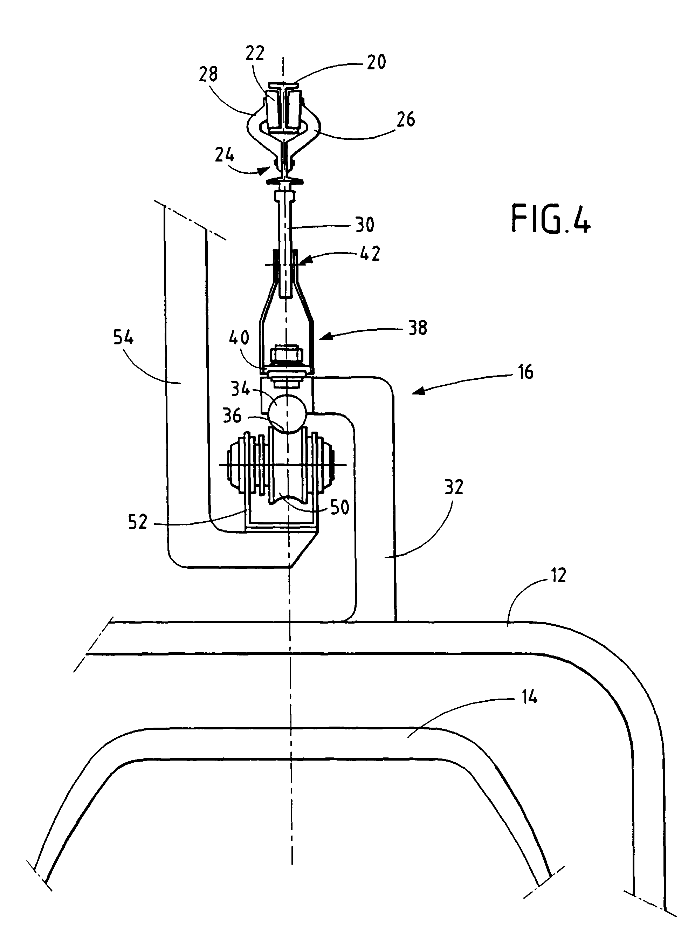

Le trolley 26 possède (figure 4) deux extrémités libres 28 sur lesquelles sont montés de façon symétrique deux galets 22. La surface de roulement 29 ou périphérie de chaque galet 22 repose sur ce rail 20, au niveau de la surface supérieure de l'aile horizontale inférieure du I.

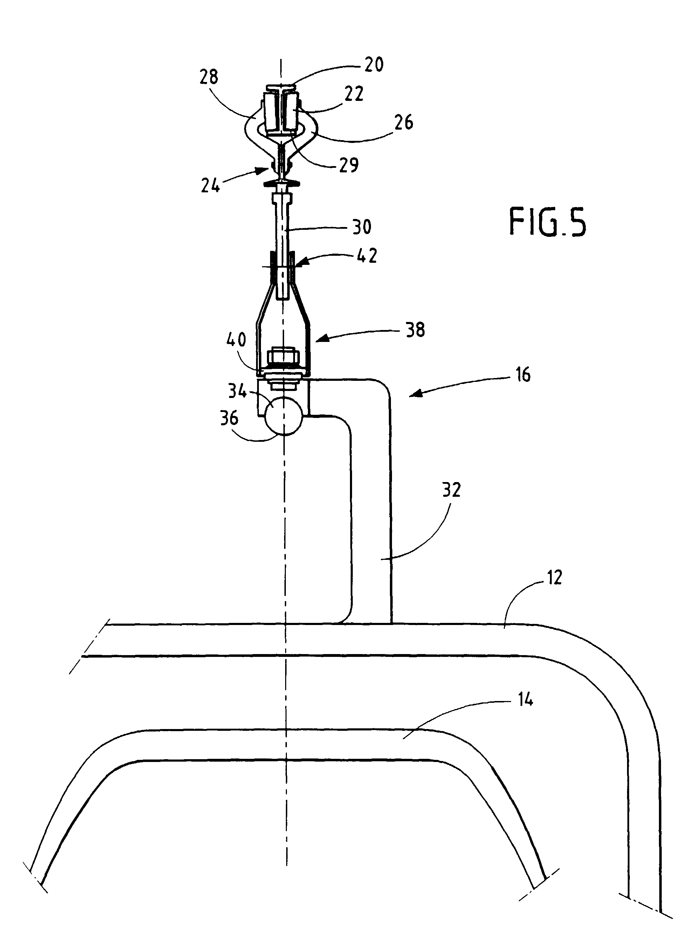

On se reportera à la figure 5 illustrant la balancelle sur la ligne de transfert principale, sans aucune possibilité de déchargement de cette balancelle puisque cette balancelle 12 n'est pas en regard des moyens de déchargement.

Les moyens de suspension de balancelle 16 comprennent deux montants verticaux 32 fixés à l'avant et à l'arrière de la balancelle 12, ces deux montants étant reliés entre eux par une barre de déchargement horizontale 34, de préférence de section circulaire. La surface inférieure 36 de la barre de déchargement 34 est nue et libre d'accès car elle constitue une surface d'appui pour le déchargement de la balancelle. Dans le cas du mode de réalisation illustré, le montant 32 est en forme de L renversé, la barre de déchargement 34 est placée sous la branche horizontale de ce L et un étrier 38 en forme de U, dont la base 40 est placée au dessus de la branche horizontale du L, prolonge verticalement le montant 32, vers le haut.

Un ergot 42 formant un axe horizontal perpendiculaire à la barre de déchargement 34 ferme l'ouverture de l'étrier 38 et va constituer le point d'accrochage des moyens de suspension 16 sur la ligne de transfert principale 18.

Dans le cas de la figure 5, l'ergot 42 est placé dans le creux du crochet 30 de sorte que deux crochets 30 consécutifs placés sur la ligne de transfert principale 18 supportent une balancelle 12.

Dans le mode de réalisation préférentiel illustré, le système d'accouplement est composé d'un crochet 30 coopérant avec un ergot 42 mais d'autres systèmes d'accouplement peuvent être envisagés pour relier de façon non permanente les moyens de suspension de balancelle 16 aux moyens d'entraînement principaux constituant la ligne de transfert principale 18 -par exemple on peut envisager d'autres liaisons mécaniques ou une liaison magnétique entre des aimants-.

On va maintenant décrire, en relation avec la figure 4, la situation dans laquelle une balancelle se trouve en regard des moyens de déchargement du dispositif de transfert de l'invention. Lorsque la balancelle 12 arrive en regard des moyens de déchargement, la barre de déchargement 34 arrive en contact sur un chemin de galets pouvant supporter cette barre de déchargement 34. Ce chemin de galets est composé de galets 50 d'axe horizontal et orthogonal à la ligne de transfert principale 18, c'est-à-dire parallèle à la direction principale de l'ergot 42.

Ces galets 50 sont montés pivotants sur une poutre de section transversale en forme de U 52 qui constitue ainsi un chemin de roulement pour la barre de déchargement 34.

Cette poutre 52 en forme de U est fixée sur au moins une crémaillère 54 constituée d'une barre en forme de L dont la face supérieure de la partie horizontale est fixée rigidement sous le fond de la poutre 52 en forme de U.

Lorsque la balancelle 12 arrive en regard des moyens de déchargement et qu'il est prévu une séparation de la balancelle 12 de la ligne de transfert principale 18, un mouvement vertical ascendant de la crémaillère 54 permet le soulèvement du chemin de galets constitué des galets 50, de la barre de déchargement 34, de l'étrier 38 et de l'ergot 42 qui sort de son logement constitué par la boucle ouverte du crochet 30. La seconde étape du déchargement va consister à écarter la balancelle 12 ainsi décrochée de la ligne de transfert principale 18 grâce à des moyens de déplacement latéral de la balancelle reliés aux deux crémaillères 54 qui permettent le soulèvement et le support d'une balancelle 12.

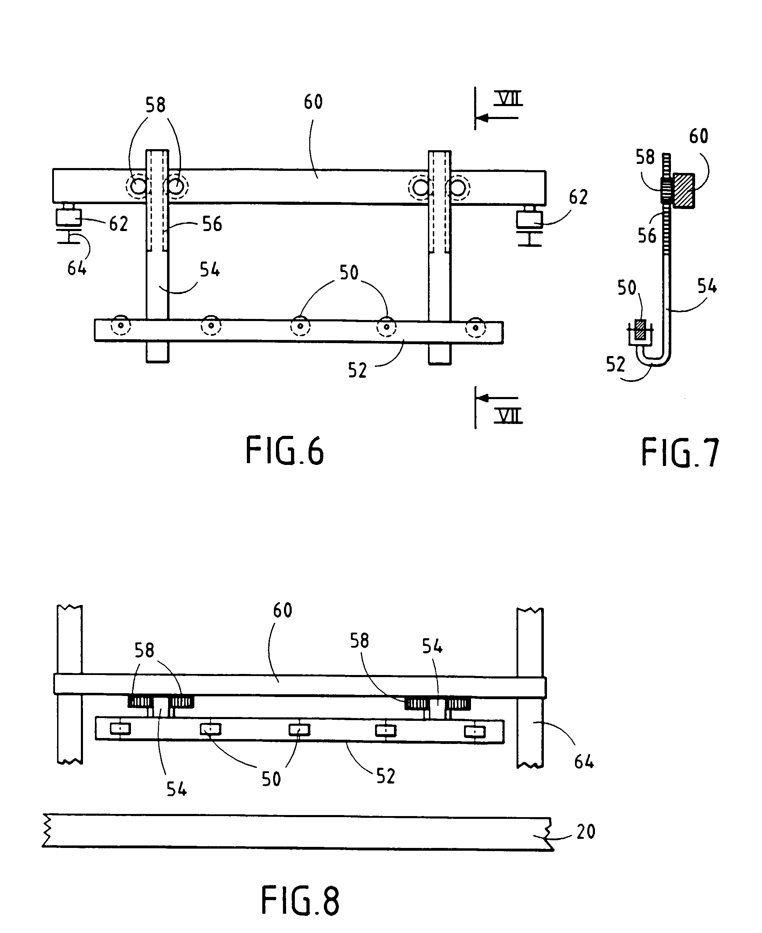

On va maintenant décrire en détail le système de déchargement de balancelle illustré sur les figures 6 à 8, qui est disposé le long de la ligne de transfert principale 18. Les deux crémaillères 54 sont placées à une certaine distance l'une de l'autre et leur partie basse supporte les deux parties d'extrémité de la poutre 52 en forme de U à l'intérieur de laquelle sont répartis à égale distance les galets 50 reliés entre eux par un élément d'entraînement tel qu'une chaîne qui engendre une ligne de transfert secondaire. La partie haute des crémaillères 54 porte des dents 56 lui permettant de prendre appui sur au moins deux pignons 58 d'axe horizontal placés de part et d'autre de la crémaillère et montés pivotants sur une poutre horizontale supérieure 60, parallèle à la poutre en forme de U 52, et parallèle à la ligne de transfert principale 18, c'est-à-dire au rail 20.

Pour permettre le mouvement de déplacement latéral des moyens de déchargement supportant la balancelle qui est écartée de la chaîne de transfert principale, la poutre horizontale supérieure 60 porte à chacune de ses extrémités un coulisseau 62 perpendiculaire à la direction principale de la poutre 60 et pouvant se déplacer par roulement ou par coulissement sur un rail 64 horizontal qui est orthogonal à la ligne de transfert principale 18 et qui constitue le chemin de roulement pour le déplacement latéral.

Ainsi grâce à la crémaillère 54, un mouvement de soulèvement peut être appliqué sur une balancelle 12 pour la décrocher de la ligne de transfert principale 18, puis cette balancelle 12 est écartée du rail 20 selon un déplacement latéral engendré par un mouvement entre les coulisseaux 62, reliés à la poutre horizontale supérieure 60, et les rails horizontaux 64.

On comprend que les galets 50 constituent, de préférence, un chemin de galets permettant le déplacement d'une balancelle selon une vitesse très lente pour la réalisation d'une opération de longue durée sur l'objet transporté par la balancelle, la balancelle arrivant sur une des extrémités de ce chemin de galets. Les galets 50 peuvent avoir leur propre système de mise en rotation grâce à des chaînes en boucle reliant deux galets consécutifs et un moteur d'entraînement qui met en rotation au moins un galet 50 du chemin de galets.

Lorsque la balancelle 12 arrive à l'autre extrémité de la poutre 52 en forme de U, on réalise en sens inverse des opérations décrites précédemment pour accrocher à nouveau la balancelle 12 sur les crochets 30 afin que cette balancelle reprenne le circuit normal de la ligne de transfert principale 18. Pour cela, les moyens de déchargement se rapprochent du rail 20 par coopération entre les coulisseaux 62 et le rail horizontal 64, et lorsque les ergots 42 se trouvent juste au dessus des crochets 30, les crémaillères 54 sont abaissées de sorte que les ergots 42 prennent appui dans le fond du creux du crochet 30 et la barre de déchargement 34 est libérée de son appui sur les galets 50.

Ce chemin de galets 50 est de longueur limité puisqu'il subit le déplacement latéral de l'ensemble de déchargement mais on peut prévoir que, lorsque les moyens de déchargement sont dans la position écartée vis à vis de la ligne de transfert principale, le chemin de galets 50 se prolonge sur une ligne de transfert secondaire fixe, avec un autre chemin de galet au bout duquel se trouve un deuxième ensemble de déchargement qui servira à remettre la balancelle sur la ligne de transfert principale.

## Revendications

1. Dispositif de transfert (10) d'objets, chaque objet étant supporté par une balancelle (12), qui comprend des moyens de suspension (16) de balancelle possédant un premier élément de système d'accouplement (42) formant ergot et une surface d'appui (36), des moyens d'entraînement principaux (20, 22, 24) permettant le déplacement de la balancelle sur une ligne de transfert principale (18) et comportant un deuxième élément de système d'accouplement (30) formant crochet ouvert vers le haut et pouvant coopérer de manière réversible avec ledit premier élément de système d'accouplement (42) de façon à former une liaison amovible entre les moyens de suspension (16) et les moyens d'entraînement principaux (20, 22, 24), et des moyens de déchargement permettant la séparation et l'éloignement de la balancelle (12) par rapport à la ligne de transfert principale (18) et comportant:
- des moyens de support (50, 52) pouvant coopérer avec ladite surface d'appui,
- des moyens de séparation possédant des moyens de soulèvement vertical (54, 56) des moyens de support permettant le désaccouplement entre le premier et le deuxième éléments de système d'accouplement, et
- des moyens de déplacement latéral de la balancelle reliés aux moyens de support et permettant un déplacement des moyens de support en position soulevée selon une direction orthogonale à la ligne de transfert principale (18),
caractérisé en ce que les moyens de support comportent un chemin de galets et en ce que les moyens de suspension (16) de la balancelle possèdent en outre deux montants (32) reliés entre eux par une barre de déchargement horizontale (34) dont la surface inférieure constitue ladite surface d'appui (36), chaque montant ayant un ergot (42).

2. Dispositif de transfert (10) selon la revendication 1, caractérisé en ce que les moyens d'entraînement principaux comportent en outre une chaîne de transfert monorail sur laquelle des crochets (30) régulièrement espacés se déplacent à vitesse constante.

3. Dispositif de transfert (10) selon la revendication 1, caractérisé en ce que ledit chemin de galets comprend des galets (50) montés pivotants dans une poutre en horizontale (52) de section en forme de U et reliés entre eux par un élément d'entraînement, et constitue une ligne de transfert secondaire.

4. Dispositif de transfert selon la revendication 3, caractérisé en ce que les moyens de soulèvement vertical comprennent au moins une crémaillère (54) verticale fixée à ladite poutre en U, le mouvement de translation verticale de chaque crémaillère étant permis par engrènement entre les dents (56) de la crémaillère avec au moins deux pignons (58) d'axe horizontal placés de part et d'autre de la crémaillère (54) et montés sur une poutre horizontale supérieure (60) et parallèle à la ligne de transfert principale (18).

5. Dispositif de transfert selon la revendication 4, caractérisé en ce que les moyens de déplacement latéral comprennent au moins un rail horizontal orthogonal (64) à la ligne de transfert principale (18) et constituant le chemin de roulement de ladite poutre horizontale (60).

## Patentansprüche

1. Vorrichtung (10) zum Weiterleiten von Gegenständen, wobei sich jeder Gegenstand auf einer Schaukel (12) abstützt, welche Einrichtungen zur Aufhängung (16) der Schaukel mit einem ersten, einen Vorsprung bildenden Element (42) eines Ankoppelsystems und einer Abstützfläche (36) aufweist, wobei Einrichtungen für den Hauptantrieb (20, 22, 24) die Verschiebung der Schaukel auf einem Hauptleitungsweg (18) ermöglichen und ein zweites Element (30) des Ankoppelsystems aufweisen, welches einen nach oben offenen Haken bildet und zum umkehrbaren Zusammenwirken mit dem ersten Element (42) des Ankoppelsystems in der Weise vorgesehen ist, dass eine lösbare Verbindung zwischen den Aufhängeinrichtungen (16) und der Hauptantriebseinrichtung (20, 22, 24) entsteht, sowie Einrichtungen zum Entladen, welche die Trennung und Entfernung der Schaukel bezüglich des Hauptleitungswegs (18) ermöglichen, wobei die Vorrichtung folgendes aufweist:
- eine Abstützeinrichtung (50, 52), welche mit der Abstützfläche zusammenwirken kann,
- eine Trenneinrichtung, welche mit Einrichtungen zum vertikalen Anheben (54, 56) der Abstützeinrichtung versehen ist, die ein Abkoppeln zwischen dem ersten und zweiten Element des Ankoppelsystems ermöglichen, und
- Einrichtungen zum seitlichen Verschieben der Schaukel, welche mit der Abstützeinrichtung verbunden sind und eine Verschiebung der Abstützeinrichtung in einer entlang einer zum Hauptleitungsweg (18) senkrechten Richtung angehobener Position ermöglichen,
dadurch gekennzeichnet, dass die Abstützeinrichtung eine Rollenbahn aufweist und dass die Aufhängeinrichtungen (16) der Schaukel des weiteren zwei Stützen (32) aufweisen, welche mittels einer horizontalen Entladestange (34) miteinander verbunden sind, deren Unterseite die Abstützfläche (36) bildet, wobei jede Stütze einen Vorsprung (42) aufweist.

2. Weiterleitungsvorrichtung (10) nach Anspruch 1, dadurch gekennzeichnet, dass die Hauptantriebseinrichtungen des weiteren eine einschienige Weiterleitungskette aufweisen, auf welcher sich die in regelmäßigen Abständen voneinander beabstandeten Haken (30) mit gleichbleibender Geschwindigkeit bewegen.

3. Weiterleitungsvorrichtung (10) nach Anspruch 1, dadurch gekennzeichnet, dass die Rollenbahn Rollen (50) aufweist, welche schwenkbar in einem horizontal angeordneten Träger (52) mit U-förmigem Querschnitt angebracht und untereinander durch ein Antriebselement verbunden sind, sowie eine einen Nebenleitungsweg darstellt.

4. Weiterleitungsvorrichtung (10) nach Anspruch 3, dadurch gekennzeichnet, dass die Einrichtungen zum vertikalen Anheben mindestens eine vertikale, an dem U-förmigen Träger fest angebrachte Zahnslange (54) aufweisen, wobei die vertikale Förderbewegung jeder Zahnstange durch Eingriff zwischen den Zähnen (56) der Zahnstange mit mindestens zwei Ritzeln (58) mit horizontaler Achse möglich ist, welche zu beiden Seiten der Zahnstange (54) angeordnet und auf einem oberen horizontalen Träger (60) angebracht sind, welcher parallel zum Hauptleitungsweg (18) verlauft.

5. Weiterleitungsvorrichtung (10) nach Anspruch 4, dadurch gekennzeichnet, dass die Einrichtungen zur seitlichen Bewegung mindestens eine horizontale Schiene (64) aufweisen, die senkrecht zum Hauptleitungsweg (18) angeordnet ist und den Weg für die Bewegung des horizontalen Trägers (60) bildet.

## Claims

1. Device (10) for transferring objects, each object being supported by a swing receptacle (12), which comprises swing receptacle tray suspension means (16) having a first coupling system member (42) forming a lug and a bearing surface (36), main drive means (20, 22, 24) allowing the swing receptacle to be displaced on a main transfer line (18) and comprising a second coupling system member (30) forming a hook opening upwards and capable of co-operating reversibly with said first coupling system member (42) so as to form a removable link between the suspension means (16) and the main drive means (20, 22, 24), and unloading means allowing the separation and moving away of the swing receptacle (12) with respect to the main transfer line (18) and comprising:
- support means (50, 52) capable of co-operating with said bearing surface,
- separation means having vertical raising means (54, 56) for the support means permitting the decoupling between the first and second coupling system members, and
- lateral displacement means for the swing receptacle connected to the support means and permitting a displacement of the support means to a raised position in a direction orthogonal to the main transfer line (18),
characterised in that the support means comprise a roller race and in that the suspension means (16) for the swing receptacle also further have two uprights (32) connected together by a horizontal unloading bar (34), the lower surface of which constitutes said bearing surface (36), each upright having a lug (42).

2. Transfer device (10) according to claim 1, characterised in that the main drive means further comprise a monorail transfer chain on which regularly spaced hooks (30) are moved at constant speed.

3. Transfer device (10) according to claim 1, characterised in that said roller race comprises rollers (50) pivotally mounted in a horizontal beam (52) of U-shaped section and connected to each other by a driving member, and forms a secondary transfer line.

4. Transfer device according to claim 3, characterised in that the vertical raising means comprise at least one vertical rack (54) fixed to said U-shaped beam, the vertical translatory motion of each rack being allowed by meshing of the teeth (56) of the rack with at least two horizontal axis gears (58) placed both sides of the rack (54) and mounted on an upper horizontal beam (60) and parallel to the main transfer line (18).

5. Transfer device according to claim 4, characterised in that the lateral displacement means comprise at least one horizontal rail (64) orthogonal to the main transfer line (18) and forming the rolling path of said horizontal beam (60).
